# EUROPEAN PATENT APPLICATION

(11) **EP 1 524 827 A1**
(43) Date of publication of application: **20.04.2005**
(21) Application number: 04023604.4
(22) Date of filing: 04.10.2004
(51) Int. Cl.: H04M 1/725, H04M 11/10, G11B 31/00

(54) **Recording control method for mobile phone with dictation functionality**

(30) Priority: 17.10.2003 JP 2003357968
(71) Applicant: NEC CORPORATION, Tokyo (JP)
(72) Inventor: Yoshino, Yukiko, Minato-ku Tokyo (JP)
(74) Representative: Glawe, Delfs, Moll & Partner

(57) **Abstract**

In a mobile phone, a wireless communication section performs wireless communication. A voice collection section collects voice input from an external device. A voice storing section stores voice collected by the voice collection section. A recording process section performs recording process for storing the voice collected by the voice collection section into the voice storing section. A process controller detects the time of recording process performed by the recording process section and instructs the wireless communication section to stop wireless communication during the recording process time. A user setting section allows a user to instruct the process controller whether or not to issue the instruction. An event generation section generates a predetermined event.

## Description

### BACKGROUND OF THE INVENTION

### 1. Field of the Invention

The present invention relates to a method for controlling recording process in a mobile phone having a function of recording voice externally input.

### 2. Description of the Related Art

As is conventionally known, in place of carrying on a dedicated recorder equipment, a mobile phone having a recording function is used to prepare a voice record of a meeting or lecture like the invention disclosed in, e.g., JP-A-2002-142025. A RAM (Random Access Memory) in the mobile phone or a recording medium detachably inserted into the mobile phone, such as a memory card, is used when voice is recorded by means of this kind of the mobile phone. In recent years, the capacity of a recording medium is increasingly becoming larger for a long-time recording.

However, when, for example, an incoming call is generated during recoding by means of the mobile phone as described above, the mobile phone cancels the recording process and start ringing. As a result, there is a possibility that important voice record of a meeting or the like is partially dropped out in spite of its long-time recording function.

### SUMMARY OF THE INVENTION

The present invention has been made in view of the above problem, and an object of the present invention is to provide a recording control method capable of obtaining a proper voice record by means of a mobile phone and a mobile phone suitable for executing the method.

According to an aspect of the present invention, there is provided a recording control method of a mobile phone for performing a wireless communication process, the mobile phone having a voice recorder unit for performing a voice-recording process of recording a externally-input voice signal, said method comprising the steps of: detecting operation of the voice-recording process in the voice recorder unit; and controlling, if the operation of the voice-recording process is detected, the mobile phone so as to stop operation of the wireless communication process during an duration of the operation of the voice-recording process.

According to another aspect of the present invention, there is provided a mobile phone comprising: a communication processor configured to perform a wireless communication process; a voice collector configured to collect a externally-input voice signal; a voice storage configured to store the voice signal collected by the voice collector; a voice recorder configured to perform a voice recording process for storing the voice signal into the voice storage; and a controller configured to detect operation of the voice-recording process in the voice recorder unit, and to control, if the operation of the voice-recording process is detected, the mobile phone so as to stop operation of the wireless communication process during an duration of the operation of the voice-recording process.

In the recording control method according to the present invention, the mobile phone stops wireless communication process during its duration of operation of recording process, thereby preventing the recording process from being interrupted due to generation of an incoming call. As a result, it is possible to create a proper voice record that does not have a loss.

Further, in the mobile phone according to the present invention, the above-mentioned recording control method can be executed. Therefore, it is possible to create a proper voice record as is the case with a dedicated recorder equipment, without a matter of concern for unexpected incoming call during recording time.

### BRIEF DESCRIPTION OF THE DRAWINGS

In the accompanying drawings:
FIG. 1 is a block diagram showing the functional configuration of a mobile phone according to a first embodiment of the present invention;
FIG. 2 is a block diagram showing the hardware configuration of the mobile phone according to the first embodiment of the present invention;
FIG. 3 is a flowchart showing the operation of the mobile phone according to the first embodiment of the present invention;
FIG. 4 is a block diagram showing the hardware configuration of a foldable mobile phone according to a second embodiment of the present invention; and
FIG. 5 is a flowchart showing the operation of the foldable mobile phone according to the second embodiment of the present invention.

### DETAILED DESCRIPTION OF THE PREFERRED EMBODIMENTS

### [First Embodiment]

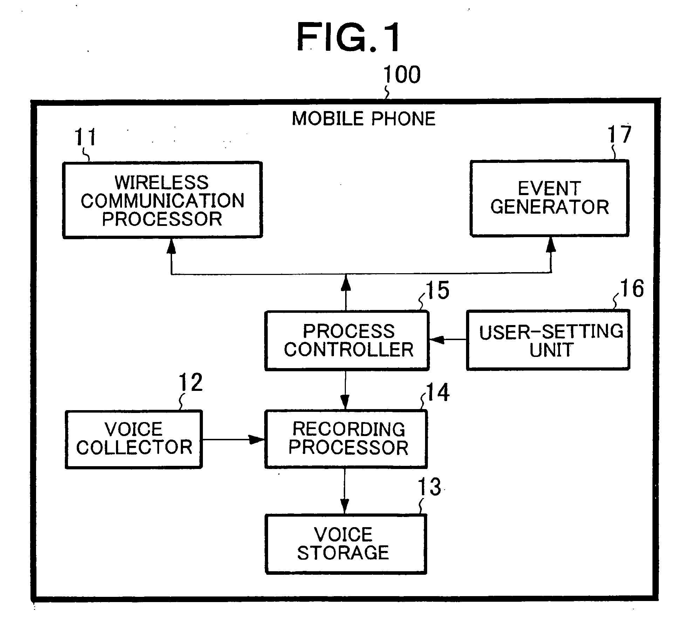

A first embodiment of the present invention will be described below in detail with reference to the accompanying drawings. FIG. 1 is a block diagram of a mobile phone according to the first embodiment of the present invention, and shows the functional configuration of a mobile phone 100. The mobile phone 100 includes: a wireless communication processor 11 that executes wireless communication process; a voice collector 12 that collects voice input from an external device; a voice storage 13 that stores the voice collected by the voice collector section 12; a recording processor 14 that executes recording process for storing the voice collected by the voice collector 12 in the voice storage 13; a process controller 15 that detects recording process time during which the recording processor 14 executes the recording process and instructs the wireless communication processor 11 to stop the wireless communication process being executed during the action duration of the recording process; a user setting unit 16 for a user to instruct the process controller 15 whether or not to issue the instruction; and an event generator 17 that generates a predetermined event.

The process controller 15 stops the wireless communication function of the wireless communication processor 11 at the start of the recording process, and resumes the wireless communication at the end of the recording process. The instruction from the process controller 15 prevents the wireless communication from being performed during the action duration of the recording process in the mobile phone 100, so that an incoming call is not generated during this period.

The user-setting unit 16 carries out a function to allow the user to previously set whether or not to stop the wireless communication function. For example, the user setting-unit 16 displays a window for inquiring whether the recording process takes precedence of receiving an incoming call.

The event generator 17 executes a program that has been set in association with the time measured by a timer mechanism (not shown) of the mobile phone 100 so as to, for example, give an alarm or announce schedules at a predetermined time.

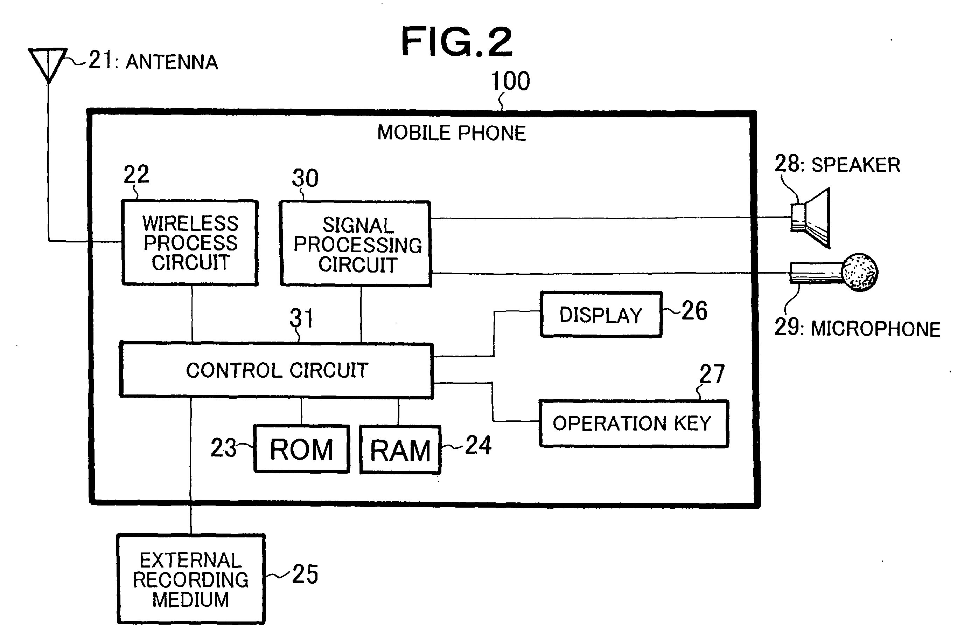

FIG. 2 shows the hardware configuration of the mobile phone 100. The mobile phone 100 includes: an antenna 21 for sending and receiving electric wave; a wireless process circuit 22 having a communication encoding circuit that carries out a function of the wireless communication section 11, a communication modem, a network control circuit and the like; a ROM 23 that stores a program for realizing functions of the recording process section 14, process controller 15, user-setting unit 16, and event generator 17; a RAM 24 that carries out a function of the voice storage 13 that stores data for use in the mobile phone 100; an external recording medium 25, such as an SD (Secure Digital) memory card, that carries out a function of the voice storage 13; a display 26 for displaying windows; an operation key 27 including a numeric keypad; a speaker 28 for outputting voice; a microphone 29 that carries out a function of the voice collector 12 that collects external voice; a signal processing circuit 30 that performs signal processing related to the voice handled by the speaker 28 and microphone 29; and a control circuit 31, such as a CPU, that controls the operation of the mobile phone 100 according to the program stored in the ROM 23.

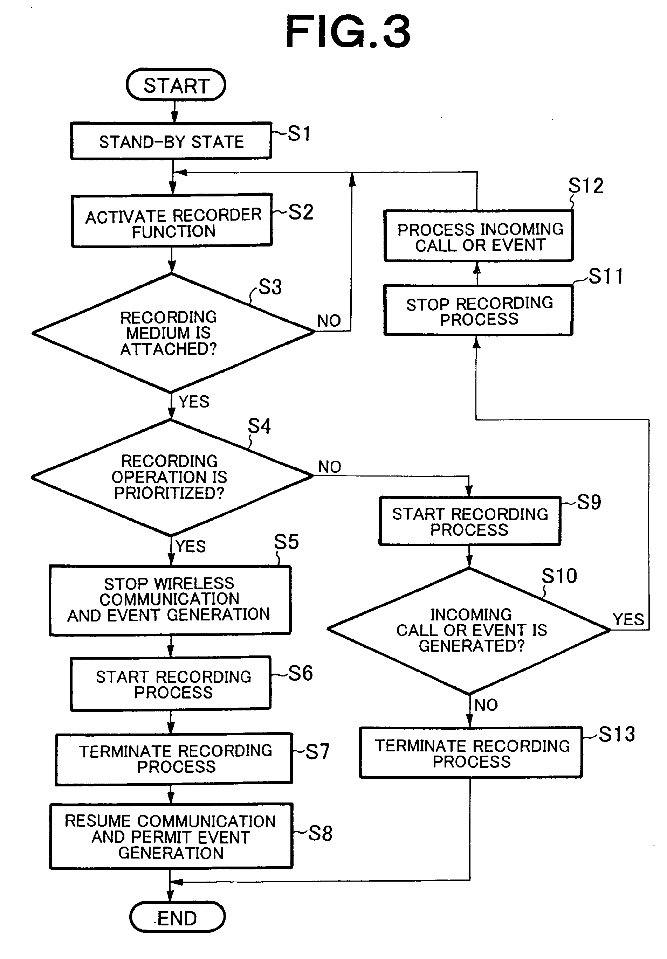

Operations of the mobile phone 100 will be described with reference to a flowchart shown in FIG. 3. Here, it is assumed that the user participating in a meeting intends to record voice data of the meeting on the external recording medium 25. While the mobile phone 100 is in a stand-by state of being capable of receiving an incoming call (step S1), the user activates a recorder function through a predetermined operation in order to record the external voice (step S2). Then, the mobile phone 100 detects presence or absence of the external recording medium 25 to be attached thereto (step S3). When the external recording medium 25 is not attached, the mobile phone 100 allows the display 26 to display a window for prompting the user to attach the external recording medium 25. It is possible, at this time, to add an additional procedure of switching the recording operation, by which the voice is recorded on the RAM 24 in the mobile phone 100 in place of the external recording medium 25.

When the mobile phone 100 detects the external recording medium 25, the user setting section 16 allows the display 26 to display a window for inquiring whether or not to give first priority to the recording process. As described above, it is possible for the user to determine the priority for the recording process. That is, when the user does not want to allow the recording data to be dropped out in preparing an important meeting record, it is possible for the user to place the top priority to the recording process. On the other hand, when the user waits a phone call even during the recording process, it is possible for the user to remove the above setting. As a result, recording process can be performed according to usage of the user.

Subsequently, when it has been selected that the recording process is prioritized on the selection window, (Yes in step S4), the process controller 15 instructs the wireless communication processor 11 to stop its wireless communication function, and also instructs the event generator 17 to stop event generation such as alarming (step S5). Thereafter, the process controller 15 allows the recording processor 14 to start its recording process (step S6).

As a result, even when a call for the mobile phone 100 is generated, the call does not arrive at the mobile phone 100. Further, even if the time to execute an event has come, the event is not generated. It follows that the recording processor 14 can continue the instructed recording process without being interrupted.

Thereafter, when the user issues an instruction to stop the recording process, and the recording processor 14 notifies the process controller 15 of the termination of the recording process (step S7). The process controller 15 instructs the wireless communication processor 11 to reestablish the wireless communication, and permits the event generator 17 to generate events (step S8). Then the mobile phone 100 returns to a stand-by state.

On the other hand, it is assumed that the wireless communication process is prioritized during the recording process (No in step S4). In this case, when the recording process has started (step S9), and incoming call or event is generated (Yes in step S10), the recording process is canceled, as in the case of the conventional mobile phone (step S11). After the process related to receiving the incoming call or alarming is executed by the wireless communication section 11 or event generator 17 (step S12), the recording process is resumed (step S2). In the case where an incoming call is not generated or there is no event to be generated during the recording process (No in step S10), the mobile phone 100 returns to a stand-by state after the recording process has been completed (step S13).

As described above, in the mobile phone 100 of the present embodiment, the process controller 15 instructs the wireless communication processor 11 and event generator 17 to cancel the wireless communication process and event generation during the recording process so as to prevent the recording process from being interrupted due to generation of an incoming call or event. As a result, a voice record can properly be created at an important and long-time meeting that the user does not want to miss.

Note that, as the mobile phone to which the recording control method according to the present invention is applied, any form of mobile phone such as a foldable mobile phone, flip phone, straight-type mobile phone may be used, as long as it has a voice recording function.

### [Second Embodiment]

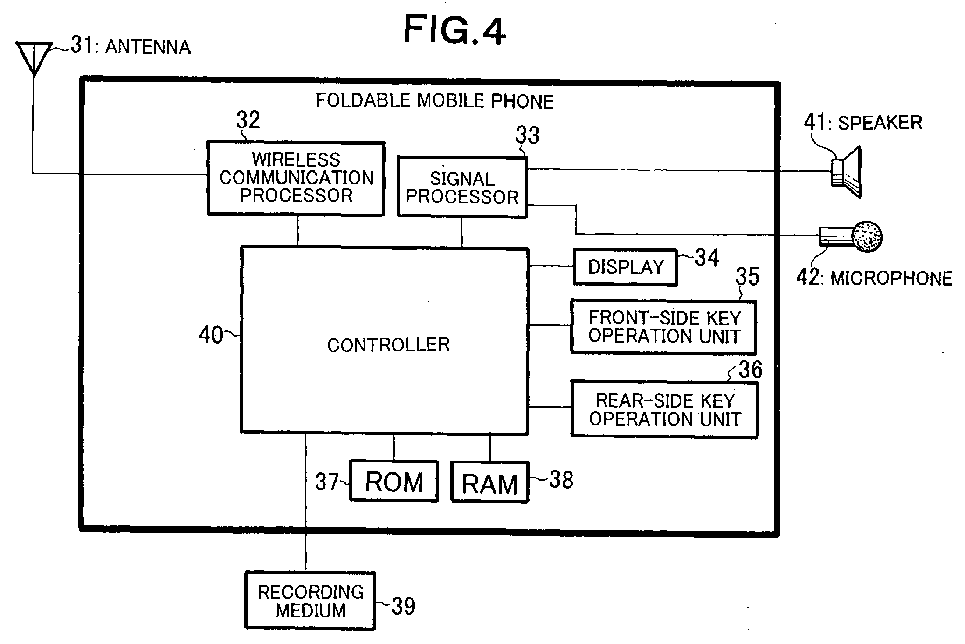

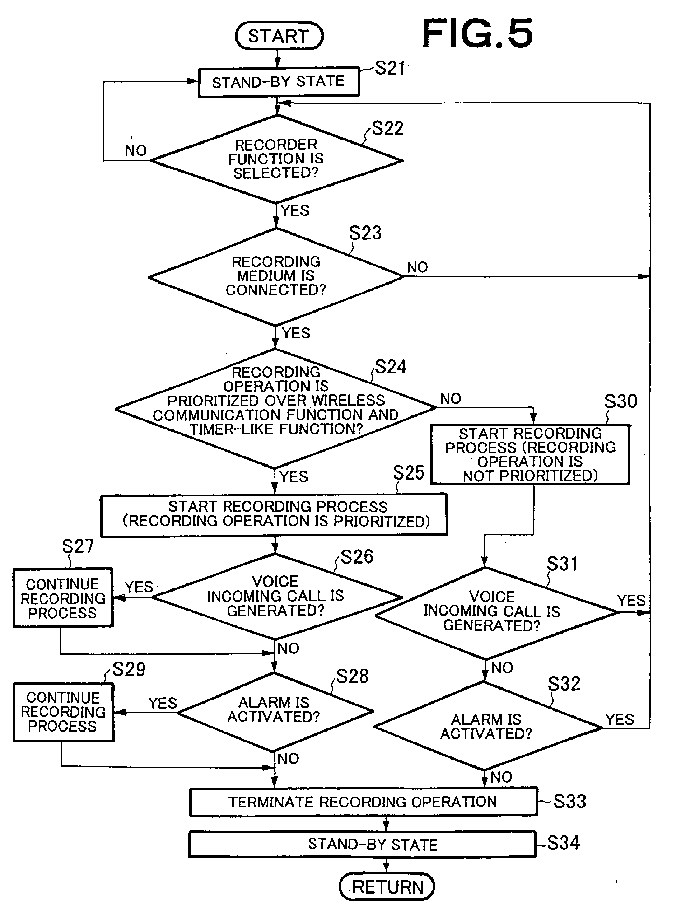

A second embodiment of the present invention will be described with reference to FIGS. 4 and 5.

In recent years, a RAM capacity is increased and direct recording to an external device is made possible, so that a long-time voice recording can be realized in the mobile phone (portable device). Some mobile phone can record voice data corresponding up to 5 hours in the case of the direct recoding. Owing to the configuration capable of realizing a long-time recording, it is possible to record contents of a meeting or lecture as voice data. However, when, e.g., an incoming call or mail arrives during the 5-hour recording process, the mobile phone stops the recording function and starts calling. That is, in a conventional recording function, recording process has often been interrupted due to generation of an incoming call or activation of an alarm, which causes disadvantages that a phone call during the meeting creates a nuisance for other participants, or the interruption of the recording may allow the important part to be dropped out. Further, the conventional mobile phone is configured to store the recorded data in the RAM incorporated in the mobile phone, which makes it impossible to perform a long-time recording.

As is the case with the first embodiment, the method in which a call or mail during voice recording process is suspended to continue the recording process is applied to the mobile phone according to the present embodiment, thereby controlling such that the communication function of the mobile phone is stopped during, e.g., a meeting to continue the recording operation. While the conventional mobile phone uses, as a recording medium, a RAM that cannot store long-time data, the mobile phone according to the present embodiment uses an external recording medium, and has a function of directly storing the recorded data on the external recording medium, thereby realizing a long time recording. Further, the mobile phone of the present embodiment can carry out a function of stopping the wireless communication or alarm function even at the time of direct recording to an external recording medium such as an SD card, a mini-SD card, a smart media, thereby achieving a long time recording.

A well-known foldable mobile phone and the like are used as the mobile phone according to the present embodiment, which has a general voice call function realized by incoming and outgoing voice, and other kinds of well-known functions such as an e-mail function realized by incoming and outgoing mail messages, a recorder function for recording input voice, a timer-like function, such as a schedule function and wakeup function, that is alarm-activated to operate at a predetermined time.

FIG. 4 shows the hardware configuration of a foldable mobile phone that realizes the above functions. The foldable mobile phone shown in FIG. 4 includes: an antenna 31; a wireless communication processor 32 connected to the antenna 31; a signal processor 33; a display 34; a front-side key operation unit 35; a rear-side key operation unit 36; a ROM 37; a RAM 38; an external recording medium 39; a controller 40 connected to the above components 32 to 39; and a speaker 41 and microphone 42 connected to the signal processor 33. As the external recording medium 39, for example, an SD card, a mini-SD card, a smart media and the like are used. In this configuration, an additional key operation section such as a lateral-side key operation section may be provided in addition to the front-side key operation unit 35 and rear-side key operation unit 36.

In this mobile phone, when the user operates the front-side key operation unit 35 to turn ON the recorder function, the signal processor 33, microphone 22, and RAM 18 or recording medium 39 operate in cooperation with each other under the control of the controller 40, thereby activating a recorder function. With the recorder function, the voice input from the microphone 22 is recorded on a recording medium through the signal processor 33 and controller 40. The user can select the RAM 18 or external recording medium 39 to record voice signal on the selected recording medium.

Operations of the mobile phone according to the present embodiment in a long-time recording with respect to the external recording medium 39 will be described with reference to a flowchart shown in FIG. 5. Here, the controller 40 executes commands of control programs previously stored in e.g., the ROM 37, thereby processing each of the steps shown in the flowchart of FIG. 5.

Firstly, in a stand-by state of the mobile phone (step S21), the controller 40 determines whether recorder function is selected (YES: selected, NO: not selected) by the user's key operation through the front-side key operation unit 35 and/or rear-side key operation unit 36 (step S22). The selection made by the key operation is carried out through, e.g., a predetermined selection window related to a recorder function displayed on the display 44.

Thus, when the recorder function is not selected (NO), the procedure returns to step S21. On the other hand, when the recorder function has been selected (YES), presence or absence of the connection of the external recording medium 39 to the mobile phone (YES: connected, NO: not connected) is confirmed in order to store the voice, which is to be recorded on the RAM 38, directly to the external recording medium 39 (step S23).

When it is determined, in step S42, that the external recording medium is not attached to the mobile phone (NO), the procedure returns to step S41 and the controller 40 prompts the user to select to either attach the external recording medium 39 to the mobile phone or directly record the voice on the RAM 38. The selection made here is carried out by the user's key operation using the front-side key operation unit 35 and/or rear-side key operation unit 36 through, e.g., a predetermined selection window displayed on the display section 44.

When it is determined, in step S42, that the external recording medium is attached to the mobile phone (YES), the controller 40 determines whether to take an incoming call, incoming mail, or the like coming through the wireless communication processor 32 during recording function, or to continue the recording operation. At the same time, the controller 40 determines whether to continue the recording operation even in the case where a timer-like function, such as a schedule function or wakeup function, which may sound an alarm and stop the recording operation even in the recording time is activated. In short, the controller 40 determines whether the recording operation is prioritized over the operations of the wireless communication function and timer-like function during recording time (YES: recording operation is prioritized, NO: recording operation is not prioritized) (step S24). The setting made here is carried out by the user's key operation using the front-side key operation unit 35 and/or rear-side key operation unit 36 through, e.g., a predetermined selection window (e.g., selection window for selecting whether or not to continue recording operation at the time when an incoming call is generated or an alarm function is activated) displayed on the display 44. In this case, the priority of the recording operation may be individually set with respect to wireless communication function and timer-like function.

Subsequently, when it has been determined, in step S24, that recording operation is prioritized (YES), the controller 40 starts recording operation to the RAM 18 or external recording medium 39 (step S25).

Even when a voice incoming call (or incoming mail or other notification that stops recording operation for the shift to voice or data communication) coming from the wireless communication processor 32 is generated during recording time (Yes in step S26: voice incoming call is generated), the controller 40 turns OFF the wireless communication function according to the setting made in step S24 to continue the recording operation (step S27). Likewise, even in the case where a timer-like function, such as a schedule function or wakeup function, which may sound an alarm and stop the recording function even in the recording time is activated during recording time (Yes in step S28: alarm function is activated), the controller 40 suspends the operation of the timer-like function according to the setting made in step S24 to continue the recording operation (step S29). The above procedure is repeated until the end of recording operation.

When it has been determined, in step S24, that the recording operation is not prioritized (NO), the controller 40 starts the recording operation to the RAM 18 or external recording medium 39 (step S30).

When a voice incoming call (or incoming mail or other notification that stops recording operation for the shift to voice or data communication) coming from the wireless communication processor 32 is generated during recording time (step S31, YES: voice incoming call is generated), the controller 40 stops the recording operation to allow the mobile phone to shift to voice or data communication according to the set priority. After the termination of the voice or data communication, the procedure returns to the step S22, and the controller 40 allows the selection window of the recorder function to be displayed.
Thereafter, the controller 40 repeats the same operation as described above. Further, even in the case where a function, such as a schedule function or wakeup function, which may sound an alarm or stop the recording function even in the recording time is activated during recording time (Yes in step S32: alarm function is activated), the controller 40 stops the recording operation to allow the mobile phone to prioritize the schedule function or notification such as wakeup alarm. After the termination of the timer-like function, the procedure returns to step S22, and the controller 40 allows the selection window of the recorder function to be displayed. Thereafter, the controller 40 repeats the same operation as described above.

In either case, when the recording operation is completed (step S33), the mobile phone shifts to a stand-by status (step S34).

According to the present embodiment, it is possible to select ON/OFF of the wireless communication function and ON/OFF of the alarm function before recording operation is started. Therefore, the user can select to continue the recording operation. Further, when the user selects OFF of the wireless communication function, the mobile phone continues recording operation even when a voice incoming call, incoming mail or other notification that shifts the mobile phone to voice or data communication coming from the wireless section, thereby realizing a long time recording. Further, when the user selects OFF of the alarm function, the mobile phone continues recording operation even when the schedule function or wakeup function, by which recording operation is interrupted in the conventional configuration, to realize a long time recording.

The above advantages are maximized in the case of: recording at an important and long-time meeting or lecture that the user does not want to miss; asking a friend to record a meeting or lecture that the user does not want to miss; and leaving a meeting due to unexpected business.

In addition, when recording operation is continued without taking a voice incoming call or receiving mail, it is possible to store, as needed, a message (for example, " I can't replay at this time due to recording operation") into the memory, and read out the message from the memory to send the message in voice or mail.

## Claims

1. A recording control method of a mobile phone for performing a wireless communication process, the mobile phone having a voice recorder unit for performing a voice-recording process of recording a externally-input voice signal, said method comprising the steps of:
detecting operation of the voice-recording process in the voice recorder unit; and
controlling, if the operation of the voice-recording process is detected, the mobile phone so as to stop operation of the wireless communication process therein during a duration of the operation of the voice-recording process.

2. The recording control method according to claim 1, further comprising a step of:
setting, before the voice-recording process is started, whether or not to stop the operation of the wireless communication process during the duration of the operation of the voice-recording process.

3. The recording control method according to claim 1, further comprising the steps of:
presetting an generation timing of a predetermined event;
detecting the generation timing upon the voice-recording process being in operation; and
controlling, if the generation timing is detected during the duration of the operation of the voice-recording process, the mobile phone so as to cancel generation of the event.

4. The recording control method according to claim 3, wherein said event is an alarm notification.

5. A mobile phone comprising:
a communication processor configured to perform a wireless communication process;
a voice collector configured to collect a externally-input voice signal;
a voice storage configured to store the voice signal collected by the voice collector;
a voice recorder configured to perform a voice recording process for storing the voice signal into the voice storage; and
a controller configured to detect operation of the voice-recording process in the voice recorder unit, and to control, if the operation of the voice-recording process is detected, the communication processor so as to stop operation of the wireless communication process therein during a duration of the operation of the voice-recording process.

6. The mobile phone according to claim 5, further comprising:
a user setting unit for allowing a user to instruct the controller whether or not to stop the operation of the wireless communication process during the duration of the operation of the voice-recording process.

7. The mobile phone according to claim 1, further comprising:
an event generator configured to generate a predetermined event at a preset timing, wherein the controller controls the event generator so as to stop generation of the event at the preset timing during the duration of the operation of the voice-recording process.

8. The mobile phone according to claim 7, wherein the event generator is configured to generate an alarm notification as the event.

9. A recording control method of a mobile phone for performing a wireless communication process, the mobile phone having a voice recorder unit for performing a voice-recording process of recording a externally-input voice signal, said method comprising the steps of:
detecting operation of the wireless communication process performed by the mobile phone upon the voice-recording process being in operation; and
controlling, if the operation of the wireless communication process is detected, the mobile phone so as to stop the action of the wireless communication process therein during an duration of the operation of the voice-recording process.

10. A mobile phone comprising:
a communication processor configured to perform a wireless communication process;
a voice collector configured to collect a externally-input voice signal;
a voice storage configured to store the voice signal collected by the voice collector;
a voice recorder configured to perform a voice recording process for storing the voice signal into the voice storage; and
a controller configured to detect operation of the wireless communication process performed by the mobile phone upon the voice-recording process being in operation, and to control, if the operation of the wireless communication process is detected, the mobile phone so as to stop the action of the wireless communication process therein during an duration of the operation of the voice-recording process.
